# EUROPÄISCHE PATENTSCHRIFT

(11) **EP 1 650 055 B1**
(45) Veröffentlichungstag und Bekanntmachung des Hinweises auf die Patenterteilung: **15.12.2010**
(21) Anmeldenummer: 05109808.5
(22) Anmeldetag: 21.10.2005
(51) Int. Cl.: B60B 35/00

(54) **Antriebsbrücke**
Driving bridge
Pont d'entraînement

(30) Priorität: 21.10.2004 DE 202004016348 U
(43) Veröffentlichungstag der Anmeldung: 26.04.2006
(73) Patentinhaber: MULAG Fahrzeugwerk Heinz Wössner GmbH & Co. KG, 77728 Oppenau (DE)
(72) Erfinder: Verbücheln, Karl-Josef, 77871 Renchen-Ulm (DE)
(74) Vertreter: Alber, Norbert

(56) Entgegenhaltungen:
- EP-A- 1 266 784
- DE-A1- 10 330 690
- DE-C1- 4 010 742

## Beschreibung

### I. Anwendungsgebiet

Die Erfindung betrifft eine Achsbrücke bzw. die Antriebsbrücke zur Herstellung der Achsbrücke.

### II. Technischer Hintergrund

Unter einer Achsbrücke wird für die Zwecke der vorliegenden Anmeldung eine Achsbaugruppe verstanden, in die zwei Radnaben-Motoren integriert sind, und die wie der Achskörper einer ungelenkten, angetriebenen Achse unter dem Chassis eines Fahrzeugs montiert werden kann, insbesondere bei langsam fahrenden Schleppern, insbesondere Flughafen-Schleppern.

Während bei einer angetriebenen konventionellen Achse die am Achskörper angeordneten Radnaben von einem zentralen Verteilergetriebe aus über Antriebswellen, die von einem zentralen Motor kommen, angetrieben werden, werden bei elektrischen und hydrostatischen Antrieben häufig Einzelmotore, die die einzelnen Radnaben direkt antreiben und diesen unmittelbar zugeordnet sind, verwendet.

Da insbesondere beide Antriebskonzepte, also zentraler Motor ebenso wie Radnaben-Motoren, und bei den Radnaben-Motoren wiederum unterschiedliche Antriebsarten (elektrisch oder hydrostatisch) und wegen der unterschiedlichen Leistungsklassen auch unterschiedliche Abmessungen an ein und demselben Chassis verbaut werden müssen, gestaltet sich die Montage schwierig und zeitaufwendig, da sie je nach Variante anders durchgeführt werden muss. Hinzu kommen noch weitere Parameter, die die Variantenvielfalt zusätzlich erhöhen, nämlich
- Anordnung einer solchen Achse als Vorderachse oder Hinterachse,
- Anordnung der Achse ungefedert am Chassis oder über dazwischen angeordnete Blattfedern oder andere Federungselemente.

DE 40 10 742 C1 offenbart den Oberbegriff des Patentanspruchs 1.

### III. Darstellung der Erfindung

### a) Technische Aufgabe

Es ist daher die Aufgabe gemäß der Erfindung, eine Antriebsbrücke zu schaffen, die je nach Art und Größe der darin einzubauenden Radnaben-Motoren schnell und einfach abgewandelt werden kann, und als fertige Baugruppe auf die immer gleiche Art und Weise anstelle eines konventionellen Achskörpers unter dem Chassis montiert werden kann. Eine weitere Aufgabe besteht in der Schaffung eines Bausatzes zur Herstellung solcher Antriebsbrücken bzw. mit Radnaben-Motoren zu Achsbrücken ergänzten Einheiten.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Die Befestigungsflansche dienen der immer gleichen Verbindung mit den Querstangen auf der einen Seite, weisen jedoch ihrerseits Befestigungsmöglichkeiten für eine Vielzahl unterschiedlicher Motoren auf. Ebenso dienen die Tragplatten der Befestigung an immer den gleichen Befestigungsmöglichkeiten des Fahrzeuges, können ihrerseits jedoch unterschiedliche Aufnahmevorrichtungen gegenüber den Querstangen und/oder Befestigungsflanschen der Antriebsbrücke aufweisen. Mit einer geringen Anzahl unterschiedlicher Einzelteile ist damit eine Anpassung an unterschiedliche Radnaben-Motoren möglich.

Durch die Ausbildung der Querstange als Rohrprofile sind diese einerseits billige Standardteile, andererseits ergeben sie eine hohe Stabilität der Antriebsbrücke bei geringem Gewicht.

Durch die Verschraubung der Querstangen von der Außenseite der Befestigungsflansche her ergibt sich eine einfache Montage- und Demontagemöglichkeit der Antriebsbrücke, selbst bei eingebauten Radnaben-Motoren.

Durch das Ausschneiden der Befestigungsflansche aus Plattenmaterial lassen diese sich sehr einfach in der gewünschten Form kontrollieren, vor allem so, dass die zu verwendenden Radnaben-Motoren trotz Aufsetzens von außen und Hindurcherstrecken durch den Freiraum im Inneren der spangenförmigen Flansche nicht mit der Befestigung zwischen Querstange und Flansch kollidieren und damit ein Ein- und Ausbau der Motoren möglich ist, ohne die Antriebsbrücke zu zerlegen.

Zu diesem Zweck liegen die Befestigungspunkte zwischen Befestigungsflansch und Querstange außerhalb der Kontur der Radnabenmotoren mit denen diese an dem Befestigungsflansch anliegen.

Dadurch, dass die Befestigungspunkte der Radnaben-Motoren am Übergangsbereich zwischen Motor und Nabe liegen, ist insbesondere ein Aufsetzen der Radnaben-Motoren von außen in die Flansche möglich.

Durch die spangenförmige Umgreifung des Befestigungsflansches am Motor über wenigstens 180° wird eine sehr stabile Aufnahme des Motors an der Antriebsbrücke erzielt, die noch verbessert werden kann durch einen Zusatzflansch, der nach Einsetzen des Motors in den Flansch auf der offenen Seite des Flansches am Motor angebracht wird, wobei quer zwischen den beiden Zusatzflanschen wiederum eine Zusatzquerstange angeordnet ist. Die Zusatzquerstange ist vorzugsweise identisch mit den übrigen Querstangen und besteht insbesondere aus dem gleichen Material und in der gleichen Dimensionierung.

Dabei sind die Querstangen vorzugsweise nicht nur auf Druck belastbar, sondern als Zug-/Druckstäbe ausgelegt, um jegliche Torsion der Antriebsbrücke zu verhindern.

Der Befestigung am Chassis des Fahrzeuges dienen vorzugsweise zwei Tragplatten, die in Längsrichtung, also in Fahrtrichtung, verlaufend über wenigstens zwei Querstangen hinweg entweder nur mit den Querstangen oder zusätzlich auch mit den Befestigungsflanschen verbunden sind oder nur an den Befestigungsflanschen alleine.

Bei Verbindung nur mit den Querstangen sind die Tragplatten mit diesen verschweißt und von den Flanschen aus soweit zur Mitte zurückversetzt angeordnet, dass sie den gleichen Abstand zueinander aufweisen wie die Längsträger an der Unterseite des Chassis.

Dementsprechend kann mit Hilfe unterschiedlicher Radnaben-Motoren, unterschiedlicher, insbesondere unterschiedlich langer, Querstangen und wenigstens einer Art von Befestigungsflanschen und Tragplatten ein Bausatz geschaffen werden, mit dessen Hilfe ganz unterschiedliche Radnaben-Motoren an ein und demselben oder sogar an unterschiedlichen Chassis befestigbar sind.

### c) Ausführungsbeispiele

Eine Ausführungsform gemäß der Erfindung ist im Folgenden beispielhaft näher beschrieben. Es zeigen:
- Fig. 1a:: eine fertig montierte Achsbrücke,
- Fig. 1b:: die Achsbrücke montiert in einem Vorfeld-Schlepper als Hinterachse,

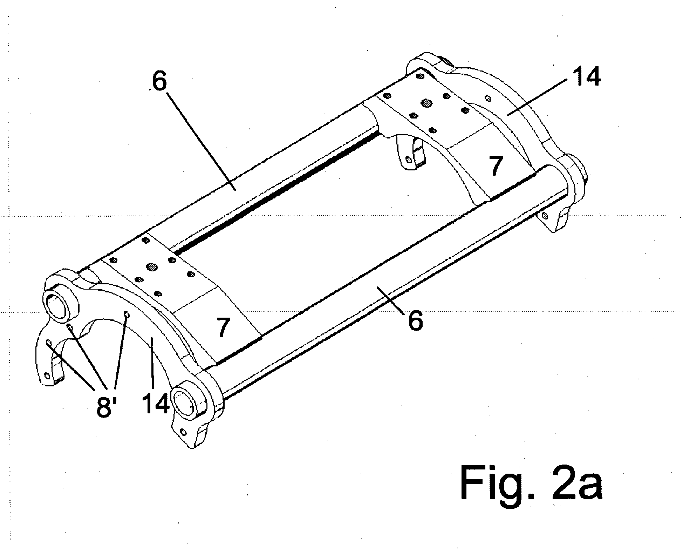

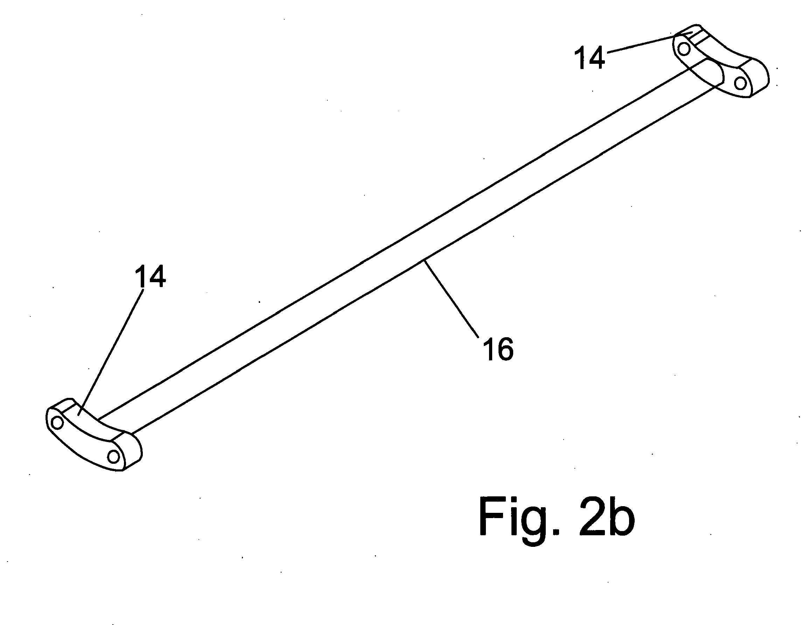

- Fig. 2:: die Antriebsbrücke, also ohne Motoren, und
- Fig. 3:: unterschiedliche Achsbrücken 12a, b mit unterschiedlichen Motoren.

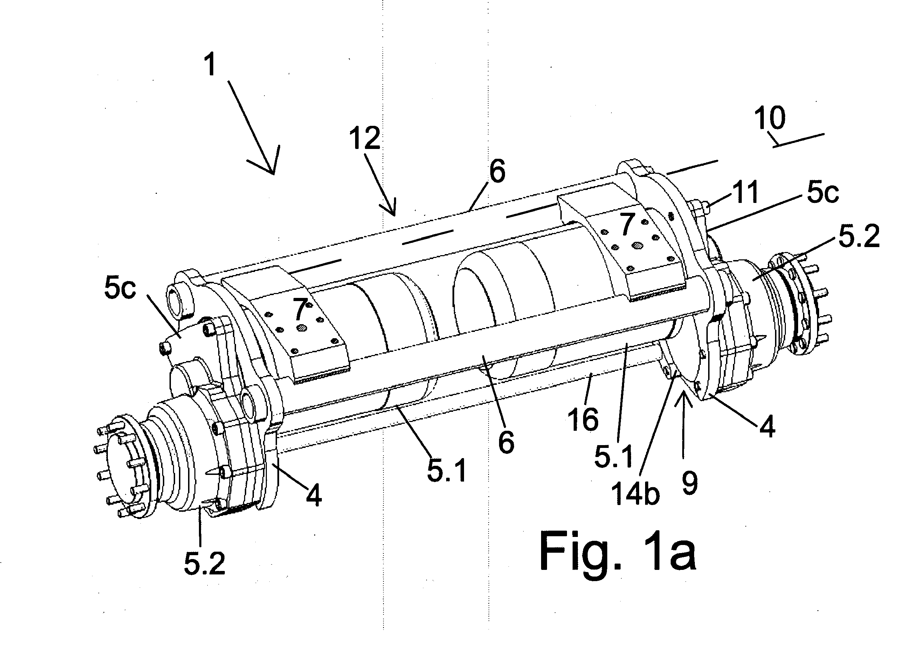

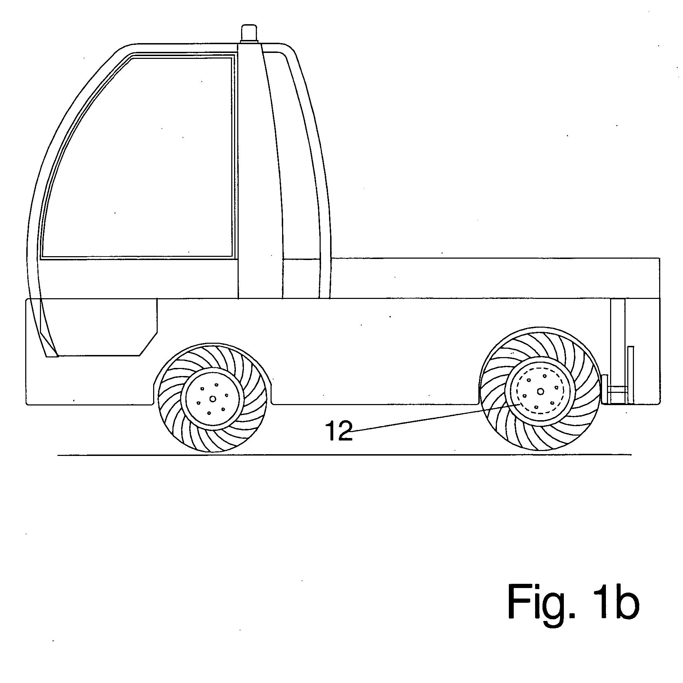

Fig. 1a zeigt die komplette Achsbrücke 12 als Baueinheit separat, wie sie gemäß Fig. 1b als Hinterachse in einem Flughafen-Schlepper eingebaut ist, dort montiert an den Blattfedern, also gegenüber dem Chassis gefedert.

In Fig. 1a ist zu erkennen, dass die Antriebsbrücke 1, in der in diesem Fall Elektromotore 5.1 montiert sind, aus zwei spangenförmigen, in Längsrichtung 10 liegenden Befestigungsflanschen 4 bestehen, die über dazwischen geschraubte Querstangen 6 auf Abstand gehalten sind.

Zwischen den beiden Querstangen 6, nahe deren äußeren Ende und damit nahe an den Befestigungsflanschen 4, verlaufen zwischen den beiden Querstangen 6 eingesetzte und eingeschraubte bzw. eingeschweißte Tragplatten 7, die sich somit an der Oberseite der Antriebsbrücke 1 befinden.

Da die Befestigungsflansche 4 sich nur etwa über die Hälfte des Umfanges erstrecken, ist auf der freien Seite des von den Befestigungsflanschen 4 umschlossenen Freiraumes 9, in dem ja die Radnaben-Motoren 5.1 sitzen, ein Zusatzflansch 14 angeordnet, wiederum auf jeder Seite der Antriebsbrücke, und diese beiden Zusatzflansche 14a, b sind über eine Zusatzquerstange 16 wiederum auf Abstand gehalten und gegeneinander stabilisiert, und zu diesem Zwecke wie die andere Querstangen 6 auch als Zug- und/oder Druckstangen ausgelegt.

Die Radnaben-Motoren 5a, b, die natürlich für beide Antriebsseiten identisch sind, sind - in der Seitenansicht betrachtet - gekröpft ausgebildet mit einem Motor-Getriebeteil 5.1 und einer demgegenüber seitlich versetzten Nabe 5.2, wobei in dem seitlichen Versatzstück teilweise das Getriebe der Motorgetriebeeinheit untergebracht ist.

Die Motoren 5a, b sind so in der Antriebsbrücke montiert, dass sie mit ihrem Versatzteil 5.3 auf der Außenseite des jeweiligen Befestigungsflansches 4 aufgesetzt und dort in entsprechenden Befestigungsbohrungen 8' verschraubt sind, während sich die Motorgetriebeeinheit 5.1 durch den mittigen Freiraum 9 in dem Befestigungsflansch 4 hindurch in den Innenraum zwischen den etwa im Kreis angeordneten Querstangen 6, 16 hinein erstrecken.

Ein in Querrichtung betrachtet kreisförmiger freier Innenraum ergibt sich, indem sowohl die aus einem Plattenmaterial gefertigten spangenförmigen Befestigungsflansche 4 in dieser Richtung einen kreisförmigen inneren Freiraum 9 umschließen als auch die Tragplatten 7 diesen Innenraum nicht tangieren und zu diesem Zweck gegebenenfalls eine konkav gewölbte Innenkontur besitzen.

Die so fertig vormontierte Achsbrücke 12 kann unter dem Chassis oder unter den Federelementen eines Chassis befestigt werden durch Verschraubung in die Bohrungen 8 der Tragplatten 7 hinein, die dort an definierten Positionen, passend zu den Aufnahmepositionen am Chassis, vorhanden sind.

Für das Auswechseln eines der Radnaben-Motoren kann entweder wiederum die gesamte Achsbrücke 12 demontiert und danach der Radnaben-Motor dort ausgebaut werden, oder es kann - je nach Platzverhältnissen im Chassis - die Achsbrücke 12 montiert bleiben, und nach Abnehmen der Zusatzflansche 14a, b mit der Zusatzquerstange 16 der entsprechende Radnaben-Motor zum Beispiel 5a - nach Lösen seiner Verschraubung gegenüber dem entsprechenden Befestigungsflansch 4 - nach unten herausgenommen werden, da sich der Flansch 4 über nicht mehr als ca. 180° um den mittigen Freiraum 9 herum erstreckt.

Neben den Verschraubungen der Radnaben-Motoren 5a, b sind auch die Verschraubungen der zwischen die Befestigungsflansche 4, 14 gesetzten Querstangen 6, 16 von außen eingebracht und können auch von außen sowohl nachgezogen als auch gelöst werden, falls dies erforderlich sein sollte.

Ebenso können - falls die Einbauverhältnisse dies erfordern - die Radnaben-Motoren 5a, b mit ihrem Befestigungsflansch nicht von der Außenseite sondern gegen die Innenseite der Befestigungsflansche 4 der Antriebsbrücke anliegen.

Auch ein Befestigungsflansch 4, der den Freiraum 9 weiter als über 180° umschließt, insbesondere ringförmig umschließt, ist möglich, bedeutet jedoch eine Einschränkung der Montage- und Demontagemöglichkeiten.

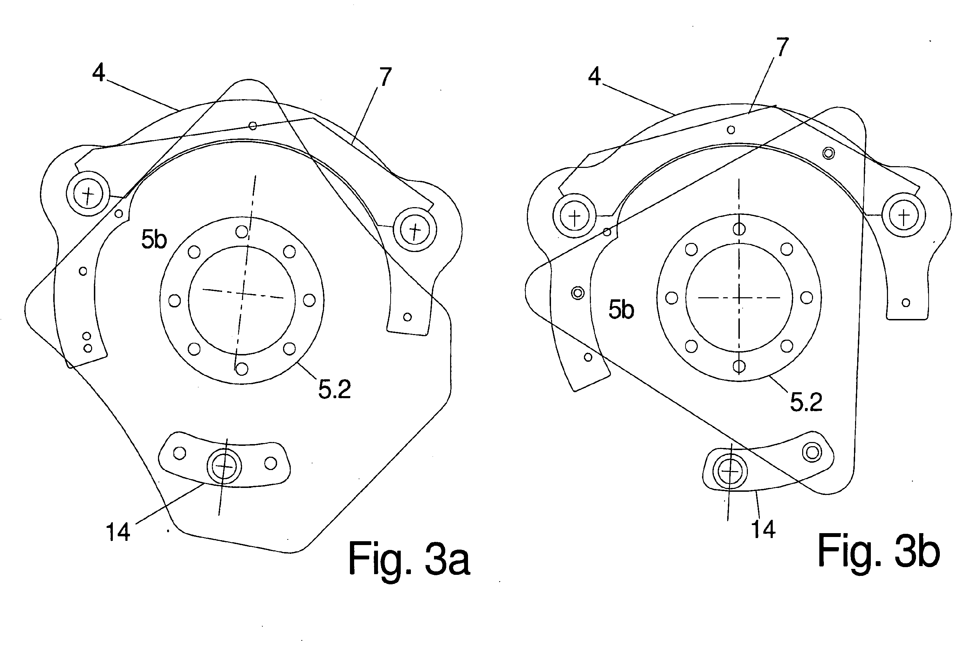

Die Fig. 3a und 3b zeigen betrachtet in Querrichtung, also in Verlaufsrichtung der Querstangen 6, unterschiedliche Achsbrücken:

Abhängig von der Gestaltung der verwendeten Radnaben-Motoren 5a bzw. 5b und den dem entsprechend unterschiedlich positionierten Befestigungspunkten an diesen Radnaben-Motoren sind auch die dazu passenden Befestigungsflansche 4a, b unterschiedlich gestaltet. In Einzelfällen können die Befestigungsflansche 4a, b gleich gestaltet sein, jedoch unterschiedliche Befestigungsbohrungen 8' für die verschiedenen Motore 5a, b aufweisen.

Auch die Position für die Querstangen 6 sowie Form, Position und überhaupt das Vorhandensein des Zusatzflansches 14 hängen ebenfalls primär von dem gewählten Motor 5a, b und zusätzlich von der Einbausituation des entsprechenden Chassis, insbesondere der notwendigen Spurbreite, ab, und ebenso die Länge der Querstangen 6, 16.

### BEZUGSZEICHENLISTE

- 1: Antriebsbrücke
- 2: Achse
- 3: Fahrzeug
- 4a, b: Befestigungsflansch
- 5a, b: Radnaben-Motor
- 5.1: Motor-Getriebeeinheit
- 5.2: Nabe
- 5.3: Versatzstück
- 6a, b: Querstange
- 7a, b: Tragplatte
- 8, 8': Bohrung
- 9: Freiraum
- 10: Längsrichtung
- 11: Befestigungspunkt
- 12: Achsbrücke
- 14: Zusatzflansch
- 16: Zusatz-Querstange

## Patentansprüche

1. Antriebsbrücke (1) zur Aufnahme von Radnaben-Motoren (5) an einer ungelenkten Achse (2) eines Fahrzeuges (3),
**gekennzeichnet durch**
- einen Befestigungsflansch (4) an jeder Seite der Antriebsbrücke (1) zur Verschraubung je eines der Radnaben-Motoren (5),
- wenigstens zwei Querstangen (6) zur Verbindungs- und Abstandseinstellung der Befestigungsflansche (4) zueinander, und
- wenigstens eine Tragplatte (7), die mit dem Rest der Antriebsbrücke (1), insbesondere auf deren Oberseite, fest verbunden ist und Befestigungsvorrichtungen, insbesondere Bohrungen (8), zur Verschraubung am Fahrzeug, aufweisen.

2. Antriebsbrücke (1) nach Anspruch 1,
**dadurch gekennzeichnet, dass**
die Querstangen (6) Rohrprofile sind.

3. Antriebsbrücke (1) nach einem der Ansprüche 1 oder 2,
**dadurch gekennzeichnet, dass**
die Querstangen (6) mit den Befestigungsflanschen (4) verschraubt sind durch von der Außenseite in die Befestigungsflansche (4) eingebrachte Verschraubungen.

4. Antriebsbrücke (1) nach einem der vorhergehenden Ansprüche, **dadurch gekennzeichnet, dass**
- die Befestigungsflansche (4) aus Plattenmaterial ausgeschnitten sind und insbesondere eine spangenförmige Kontur solcher Form und Dimensionierung aufweisen, dass
- der Motor- und/oder Getriebeteil des Radnabenmotors (5) sich durch den inneren Freiraum (9) des spangenförmigen Befestigungsflansches (4) hindurch erstreckt und die Befestigungspunkte (11) der Radnaben-Motoren (5) auf dem Befestigungsflansch (4) positioniert und in entsprechenden Befestigungsbohrungen (8'), insbesondere von der Außenseite her, angesetzt und verschraubt werden können, ohne die Verschraubungen zwischen Querstangen (6) und Befestigungsflanschen (4) zu verdecken oder mit diesen zu kollidieren.

5. Antriebsbrücke (1) nach einem der vorhergehenden Ansprüche, **dadurch gekennzeichnet, dass**
- die Befestigungspunkte zwischen Befestigungsflansch (4) und Querstangen (6) außerhalb der Kontur der Radnaben-Motoren (5) liegen, mit denen diese an dem Befestigungsflansch (4) anliegen, und/oder insbesondere
- die Befestigungspunkte (11) der Radnaben-Motoren (5) am Übergangsbereich zwischen Motor (5.1) und Radnabe (5.2) angeordnet sind.

6. Antriebsbrücke (1) nach einem der vorhergehenden Ansprüche, **dadurch gekennzeichnet, dass**
- die spangenförmige Kontur des Befestigungsflansches (4) den Motor (5.1) bzw. die Motor-Getriebe-Einheit über wenigstens 180° umgreift, und/oder insbesondere
- an der offenen Umfangsseite des spangenförmigen Befestigungsflansches (4) ein Zusatzflansch (14) in der Hauptebene des Befestigungsflansches (4) angeordnet und mit dem Radnaben-Motor (5) ebenfalls verschraubt wird, und die auf jeder Seite vorhandenen Zusatzflansche (14) über eine Zusatz-Querstange (16) miteinander verbunden sind.

7. Antriebsbrücke (1) nach einem der vorhergehenden Ansprüche, **dadurch gekennzeichnet, dass**
- die Zusatz-Querstange (16) insbesondere aus dem gleichen Material und in der gleichen Dimensionierung hergestellt ist wie die Querstangen (6), und/oder insbesondere
- die Querstangen (6) und/oder die Zusatz-Querstangen als Zug- und/oder Druck-Stäbe ausgelegt sind.

8. Antriebsbrücke (1) nach einem der vorhergehenden Ansprüche, **dadurch gekennzeichnet, dass**
zwei Tragplatten (7) nahe der beiden Befestigungsflansche (4) vorhanden sind.

9. Antriebsbrücke (1) nach einem der vorhergehenden Ansprüche, **dadurch gekennzeichnet, dass**
- die wenigstens eine Tragplatte (7) mit ihren beiden Enden mit den beiden Querstangen (6) fest verbunden, insbesondere verschweißt, ist und insbesondere die Tragplatte (7) vom äußeren Ende der Antriebsbrücke, insbesondere dem Befestigungsflansch (4), zur Mitte hin zurückversetzt angeordnet ist, und/oder insbesondere
- wenigstens eine Tragplatte (7) mit dem Befestigungsflansch (4) fest verbunden, insbesondere verschweißt, ist.

10. Bausatz für eine Achsbrücke (12) mit wenigstens einer Antriebsbrücke (1) gemäß einem der vorhergehenden Ansprüche und wenigstens zwei hinsichtlich ihrer Abmessungen und/oder ihres Antriebskonzepts verschiedenen Radnaben-Motoren (5a, b).

11. Bausatz nach Anspruch 10,
**dadurch gekennzeichnet, dass**
der Bausatz für die Antriebsbrücke (1)
- wenigstens zwei verschiedene Befestigungsflansche (4a, b) und/oder
- wenigstens zwei hinsichtlich der Länge und/oder der Stabilität verschiedene Querstangen (6a, b) und/oder
- wenigstens zwei verschiedene Tragplatten (7a, b) und/oder
- wenigstens zwei verschiedene Zusatzflansche (14a, b) und/oder
- wenigstens zwei verschiedene Zusatz-Querstangen (16a, b) umfasst.

## Claims

1. A drive bridge (1) for receiving wheel hub motors (5) at a non steered axis (2) of a vehicle (3), comprising:
- a mounting flange (4) at each side of the drive bridge (1) for bolting down one respective wheel hub motor (5);
- at least two transversal bars (6) for adjusting the connection and the distance of the mounting flanges (4) from one another; and
- at least one support plate (7) which is fixated to the rest of the drive bridge (1), in particular on its top side and includes mounting devices, in particular bore holes (8) for bolting to the vehicle.

2. The drive bridge (1) according to claim 1, wherein the transversal bars (6) are tubular profiles.

3. The drive bridge (1) according to one of the claims 1 or 2, wherein the transversal bars (6) are bolted together with the mounting flanges (4) through threaded connections imparted into the mounting flanges (4) from the outside.,

4. The drive bridge (1) according to one of the preceding claims, wherein
- the mounting flanges (4) are cut from plate material and in particular include a bracket shaped contour with a shape and dimension, so that
- the motor and/or transmission component of the wheel hub motor (5) extends through the inner free space (9) of the bracket shaped mounting flange (4) and the mounting points (11) of the wheel hub motors (5) can be positioned on the mounting flange (4) and can be applied to respective mounting bore holes (8'), in particular from the outside and can be bolted at the mounting bore holes, in particular without covering the threaded connections between the transversal bars (6) and the mounting flanges (4) or colliding with them.

5. The drive bridge according (1) to one of the preceding claims, wherein
- the mounting points between the mounting flange (4) and transversal bars (6) are disposed outside of the contour of the wheel hub motors (5), wherein the contours contact the mounting flange (4) and/or in particular,
- the mounting points (11) of the wheel hub motors (5) are disposed at a transition portion between the motor 5.1 and the wheel hub 5.2.

6. The drive bridge (1) according to one of the preceding claims, wherein
- the bracket shaped contour of the mounting flange (4) reaches around the motor 5.1 or the motor transmission unit over at least 180° and/or in particular
- a supplemental flange (14) is disposed at the open circumferential side of the bracket shaped mounting flange (4) in the main plane of the mounting flange (4) and is also bolted together with the wheel hub motor (5), and supplemental flanges (14) provided on each side are connected with one another through a supplemental transversal bar (16).

7. The drive bridge (1) according to one of the preceding claims, wherein
- the additional transversal bar (16) is in particular made from the same material with the same dimension as the material used for the transversal bars (6) and/or in particular
- the transversal bars (6) and/or the supplemental transversal bars are configured as tension- and/or compression rods

8. The drive bridge (1) according to one of the preceding claims, wherein two support plates (7) are provided proximal to the two mounting flanges (4).

9. The drive bridge (1) according to one of the preceding claims, wherein
- the at least one support plate (7) is fixated with both its end at the two transversal bars (6), in particular welded, and in particular the support plate (7) is disposed recessed from the outer end of the drive bridge, in particular the mounting flange (4), towards the center, and/or in particular
- at least one support plate (7) is fixated at the mounting flange (4) in particular welded.

10. A kit for an axle bridge (12), comprising: at least one drive bridge (1) according to one of the preceding claims and at least two hub motors (5a, b) which are different with respect to their dimensions and/or drive concepts.

11. A kit according to claim 10, wherein the kit for the drive bridge (1) comprises:
- at least two different mounting flanges (4a, b) and/or
- at least two transversal bars (6a, b) which are different with respect to length and/or stability and/or
- at least two different support plates (7a, b) and/or
- at least two different supplemental flanges (14a, b) and/or
- at least two supplemental transversal bars (16a, 6).

## Revendications

1. Pont d'entraînement (1) pour le logement de moteurs moyeux (5) sur un essieu non articulé (2) d'un véhicule (3), **caractérisé en ce qu'**
- une bride de fixation (4) sur chaque face du pont d'entraînement(1) pour visser chacun des moteurs moyeux (5),
- au moins deux traverses (6) pour le réglage du vissage et de la distance des brides de fixation (4) entre elles, et
- au moins une plaque support (7), qui est reliée fixement au reste du pont d'entraînement (1), en particulier sur sa face supérieure et présente des dispositifs de fixation, en particulier des perçages (8) pour le vissage sur le véhicule.

2. Pont d'entraînement (1) selon la revendication 1, **caractérisé en ce que** les traverses (6) sont des profilés tubulaires.

3. Pont d'entraînement (1) selon l'une des revendications 1 ou 2, **caractérisé en ce que** les traverses (6) sont vissées aux brides de fixation (4) par des vissages ménagés depuis la face externe dans la bride de fixation (4).

4. Pont d'entraînement (1) selon l'une des revendications précédentes, **caractérisé en ce que**
- les brides de fixation (4) sont découpées à partir de matériau en plaque et présentent en particulier un contour en forme d'agrafe de forme et dimension de sorte
- que la partie moteur et/ou engrenage du moteur moyeu (5) s'étendent à travers l'espace libre interne (9) de la bride de fixation (4) en forme d'agrafe et les points de fixation (11) des moteurs moyeux (5) sont positionnés sur la bride de fixation (4) et peuvent être placés et vissés dans des perçages de fixation correspondant (8'), en particulier depuis la face externe sans recouvrir les vissages entre les traverses (6) et les brides de fixation (4) ou sans entrer en collision avec ces dernières.

5. Pont d'entraînement (1) selon l'une des revendications précédentes, **caractérisé en ce que**
- les points de fixation entre la bride de fixation (4) et les traverses (6) se trouvent à l'extérieur du contour des moteurs moyeux (5) avec lesquels ces derniers s'appliquent contre la bride de fixation (4), et/ou en particulier
- les points de fixation (11) des moteurs moyeux (5) sont disposés sur la zone de transition entre le moteur (5.1) et le moyeu (5.2).

6. Pont d'entraînement (1) selon l'une des revendications précédentes, **caractérisé en ce que**
- le contour en forme d'agrafe de la bride de fixation (4) entoure le moteur (5.1) respectivement l'unité moteur-engrenage sur au moins 180°, et/ou en particulier
- sur la face périphérique de la bride de fixation en forme d'agrafe (4), il est disposé une bride supplémentaire (14) dans le plan principal de la bride de fixation (4) qui est également vissée au moteur moyeu (5) et les brides supplémentaires (14) se trouvant de chaque côté sont reliées entre elles par une traverse supplémentaire (16).

7. Pont d'entraînement (1) selon l'une des revendications précédentes, **caractérisé en ce que**
- la traverse supplémentaire (16) est fabriquée en particulier dans le même matériau et avec les mêmes dimensions que les traverses (6), et/ou en particulier
- les traverses (6) et/ou les traverses supplémentaires sont réalisées comme des barres de traction et/ou de pression.

8. Pont d'entraînement (1) selon l'une des revendications précédentes, **caractérisé en ce que**
deux plaques support (7) sont prévues près des deux brides de fixation (4).

9. Pont d'entraînement (1) selon l'une des revendications précédentes, **caractérisé en ce qu'**
- au moins une plaque support (7) est reliée fixement par ses deux extrémités aux deux traverses (6), en particulier soudée et en particulier la plaque support (7) est disposée en retrait en direction du milieu depuis l'extrémité extérieur du pont d'entraînement en particulier de la bride de fixation (4), et/ou en particulier
- au moins une plaque support (7) est reliée fixement, en particulier soudée à la bride de fixation (4).

10. Kit pour un pont d'entraînement (12) avec au moins un point d'entraînement (1) selon l'une des revendications précédentes et avec au moins deux moteurs moyeux (5a, b) différents dans leurs dimensions et/ou leur concept d'entraînement.

11. Kit selon la revendication 10, **caractérisé en ce que** le kit pour les ponts d'entraînement (1) comprend
- au moins deux brides de fixation différentes (4a, b) et/ou
- au moins deux traverses (6a, b) différentes dans leur longueur et/ou la stabilité et/ou
- au moins deux plaques supports différentes (7a, b) et/ou
- au moins deux brides supplémentaires différentes (14a, b) et/ou
- au moins deux traverses différentes supplémentaires (16a, b).
